# EUROPÄISCHE PATENTSCHRIFT

(11) **EP 2 743 789 B1**
(45) Veröffentlichungstag und Bekanntmachung des Hinweises auf die Patenterteilung: **20.06.2018**
(21) Anmeldenummer: 13401123.8
(22) Anmeldetag: 02.12.2013
(51) Int. Cl.: G05D 1/02

(54) **Selbstfahrender Roboter und Verfahren zur Bestimmung einer Drehstellung mindestens eines Antriebsrads eines selbstfahrenden Roboters**
Self-propelled robot and method for determining a rotation position of at least one drive wheel
Robot autopropulsé et procédé de détermination d'une position en rotation d'au moins une roue d'entraînement

(30) Priorität: 17.12.2012 DE 102012112401
(43) Veröffentlichungstag der Anmeldung: 18.06.2014
(73) Patentinhaber: Miele & Cie. KG, 33332 Gütersloh (DE); Universität Bielefeld, 33615 Bielefeld (DE)
(72) Erfinder: Fleer, David, 33619 Bielefeld (DE); Hillen, Lorenz, 33615 Bielefeld (DE); Horst, Michael, 33613 Bielefeld (DE); Krzykawski, Martin, 32457 Porta Westfalica (DE); Möller, Ralf, 32257 Bünde (DE)

(56) Entgegenhaltungen:
- WO-A1-2011/138662
- DE-B3-102007 016 802
- LI W ET AL: "Method of rotation angle measurement in machine vision based on calibration pattern with spot array", APPLIED OPTICS, OPTICAL SOCIETY OF AMERICA, WASHINGTON, DC; US, Bd. 49, Nr. 6, 20. Februar 2010 (2010-02-20), Seiten 1001-1006, XP001552188, ISSN: 0003-6935, DOI: 10.1364/AO.49.001001

## Beschreibung

Die Erfindung betrifft einen selbstfahrenden Roboter, insbesondere ein selbstfahrendes Bodenbearbeitungsgerät, der mindestens eine Antriebseinheit mit einem Antriebsrad und mindestens eine mit dem Antriebsrad gekoppelte Kodierscheibe zur Bestimmung einer Drehstellung des Antriebsrads aufweist. Ferner sind bei dem selbstfahrenden Roboter eine Kamera zur Aufnahme von Bildern einer Umgebung des Roboters und eine Steuereinrichtung zur Auswertung der Bilder der Kamera und zur Steuerung der Antriebseinheit vorgesehen. Die Erfindung betrifft weiterhin ein Verfahren zur Bestimmung einer Drehstellung mindestens eines Antriebsrads eines derartigen selbstfahrenden Roboters.

Selbstfahrende Roboter dienen der automatisierten Verrichtung von nicht ortsgebundenen Tätigkeiten. In Form von selbstfahrenden Bodenbearbeitungsgeräten dienen solche Roboter der automatisierten Bearbeitung, beispielsweise Reinigung, von Flächen, ohne dass sie von einem Benutzer geschoben oder geführt werden müssen. Zu solchen selbstfahrenden Bodenbearbeitungsgeräten zählen für den Innenbereich beispielsweise selbstfahrende Staubsauger, auch Saugroboter genannt. Weiterhin werden für den Innenbereich selbstfahrende Reinigungsgeräte zum Wischen von Bodenbelägen eingesetzt. Für den Außenbereich sind als selbstfahrende Bodenbearbeitungsgeräte Mähroboter zum Rasenmähen bekannt und, für eine landwirtschaftliche Nutzung, selbstständig arbeitende Landwirtschaftsmaschinen, beispielsweise zum Pflügen, Säen oder Ernten von großen Feldern.

Dabei ist es bekannt, beispielsweise aus der Druckschrift DE 10 2007 016 802 B3, die von dem selbstfahrenden Roboter abgefahrene Bahnkurve odometrisch zu bestimmen. Bei einem odometrischen Verfahren wird die (vermutlich) gefahrene Strecke durch Auswertung der Drehbewegung der einzelnen Räder des Roboters ermittelt. Da die derart odometrisch bestimmte Position durch Radschlupf, insbesondere auf Teppichen oder hervorgerufen durch Bodenunebenheiten im Innenbereich oder durch schlammigen oder sandigen Untergrund im Außenbereich, von der tatsächlichen Position des Roboters mit der Zeit zunehmend abweichen kann, kann vorgesehen sein, die odometrisch bestimmte Position durch eine zusätzliche Positionsbestimmung zu ergänzen oder zu korrigieren. Bei der genannten Druckschrift werden dazu in regelmäßigen Zeitabständen Bilder der Umgebung des Roboters aufgenommen und abgespeichert. Durch einen Vergleich von aktuellen mit gespeicherten Bildern kann durch ein sogenanntes visuelles Homing-Verfahren die odometrisch bestimmte Position des Roboters korrigiert werden.

Bei einer häufig eingesetzten Methode zur odometrischen Bestimmung der Drehbewegung bzw. Drehstellung einzelner Antriebsräder des Roboters werden die Antriebsräder mit Markierungen versehen, die optisch mittels einer Reflexlichtschranke abgefragt werden. Alternativ zur Anbringung der Markierungen unmittelbar auf einem Antriebsrad ist es bekannt, eine Kodierscheibe, die die optisch auslesbaren Markierungen aufweist, drehfest mit dem Antriebsrad oder einer anderen rotierenden Komponenten des Antriebsstrangs, beispielsweise einer Getriebewelle oder einer Motorwelle, zu verbinden und die Markierungen auf der Kodierscheibe mittels einer Reflex- oder Gabellichtschranke abzufragen. In beiden Fällen ist für das Auslesen der Markierungen eine separate Reflex- oder Gabellichtschranke vorzusehen, deren Einbau und korrekte Justierung den Kosten- und Zeitaufwand bei der Herstellung eines derartigen Roboters erhöht.

Aus der WO 2011/138662 ist ein System für ein Fahrzeug bekannt, bei dem über zwei am Fahrzeug angeordnete Kameraelemente, die räumliche Ausrichtung der Fahrzeugräder bestimmt wird. Dazu sind auf den Rädern Zielelemente angeordnet, die eine graphische Bemusterung aufweisen, die sich mittels Bildanalyse eindeutig erfassen und auswerten lässt. Die über die Kameraelemente aufgenommen Bilder der Fahrzeugräder eignen sich auf diese Weise zur Bestimmung der räumlichen Ausrichtung der Fahrzeugräder mittels Bildanalyse.

In Li W et Al: "Method of rotation angle measurement in machine vision based on calibration pattern with spot array", APPLIED OPTICS, Bd. 49, Nur.6, 20.02.2010, Seiten 1001-1006 wird eine Methode zur Erfassung des Rotationswinkels eines sich drehenden Objekts mittels einer Kamera beschrieben.Es ist daher eine Aufgabe der vorliegenden Erfindung, einen selbstfahrenden Roboter und ein Verfahren zur Bestimmung einer Drehstellung mindestens eines Antriebsrads eines derartigen Roboters zu schaffen, bei dem auf eine separate Lichtschranke zum Auslesen von Markierungen der Kodierscheibe bzw. von unmittelbar auf dem Antriebsrad angebrachten Markierungen verzichtet werden kann.

Diese Aufgabe wird gelöst durch einen selbstfahrenden Roboter und ein Verfahren zur Bestimmung einer Drehstellung mindestens eines Antriebsrads eines selbstfahrenden Roboters mit den jeweiligen Merkmalen der unabhängigen Ansprüche.

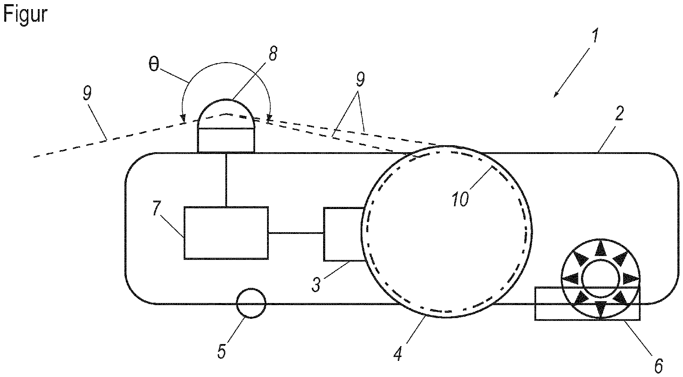

Ein erfindungsgemäßer selbstfahrender Roboter der eingangs genannten Art ist dazu eingerichtet, mit der Kamera zumindest einen Teil der Kodierscheibe abzubilden und eine Drehstellung des Antriebsrads durch Auswertung von Bildern der Kamera zu bestimmen. Entsprechend weist ein Verfahren zur Bestimmung der Drehstellung mindestens eines Antriebsrads bei einem selbstfahrenden Roboter die folgenden Schritte auf: Es wird zumindest ein Bild der Kamera aufgenommen, wobei die Kamera zumindest einen Teil der Kodierscheibe abbildet. Dann wird eine Drehstellung des mindestens einen Antriebsrads anhand der Abbildung der Kodierscheibe in dem mindestens einen aufgenommenen Bild bestimmt.

Erfindungsgemäß wird also die ohnehin bei dem Roboter vorhandene Kamera benutzt, um die Kodierscheibe abzubilden und anhand einer Auswertung der abgebildeten Kodierscheibe eine Drehstellung des Antriebsrads zu bestimmen. Ein separater Sensor, beispielsweise eine separate Lichtschranke, zum Auslesen von Markierungen der Kodierscheibe wird somit nicht benötigt. Markierungen können dabei auch unmittelbar auf dem Antriebsrad angeordnet sein, der mit den Markierungen versehene Teil des Antriebsrads ist in diesem Sinne im Rahmen der Anmeldung als eine Kodierscheibe anzusehen.

Vorteilhafte Ausgestaltungen und Weiterbildungen sind in jeweiligen abhängigen Ansprüchen angegeben.

Die Erfindung wird nachfolgend anhand von einer Figur näher erläutert. Die Figur zeigt eine schematische Darstellung eines Bodenbearbeitungsgeräts zur Durchführung des erfindungsgemäßen Verfahrens.

In der Figur ist ein mobiles Bodenbearbeitungsgerät, konkret ein Saugroboter 1, als Beispiel für einen selbstfahrenden Roboter schematisch in einer Seitenansicht dargestellt. Der Saugroboter 1 weist angeordnet an bzw. in einem Gehäuse 2 ein Antriebssystem 3 auf, das auf zwei Antriebsräder 4, eins auf jeder Seite des Saugroboters 1, wirkt. Die Antriebsräder 4 können unabhängig voneinander über hier nicht einzeln dargestellte Antriebsmotoren angetrieben werden. Weiter ist ein Stützrad 5 vorgesehen, das entweder verschwenkbar oder als eine in alle Richtungen drehbare Kugel ausgebildet ist. Bei voneinander unabhängiger Ansteuerung der Drehrichtungen und Drehgeschwindigkeiten der Antriebsräder 4 kann der Saugroboter 1 Bewegungen mit unabhängig voneinander einstellbaren Rotations- und Translationsgeschwindigkeiten auf einer zu reinigenden Fläche ausführen.

Weiterhin ist ein Saugbereich 6 in der Figur angedeutet, in dem nicht dargestellte Saugdüsen angeordnet sind, die beispielsweise bekannter Weise mit einem Filtersystem, zum Beispiel einem Staubsaugerbeutel, mit einem Gebläsemotor zusammenwirken. Unterstützend ist in dem dargestellten Ausführungsbeispiel im Saugbereich 6 eine rotierende Bürste angeordnet. Der Saugbereich 6 mit der rotierenden Bürste repräsentiert die Reinigungseinrichtungen des Saugroboters 1. Weitere für den Betrieb des Saugroboter 1 vorhandene Elemente, beispielsweise eine wiederaufladbare Batterie zur Stromversorgung, Ladeanschlüsse für die Batterie oder eine Entnahmemöglichkeit für den Staubsaugerbeutel sind in der Figur aus Gründen der Übersichtlichkeit nicht wiedergegeben.

Der Saugroboter 1 weist eine Steuervorrichtung 7 auf, die mit dem Antriebssystem 3 sowie den Reinigungseinrichtungen zu deren Steuerung verbunden ist. Auf der Oberseite des Saugroboters 1 ist eine Kamera 8 angeordnet, die zur Abbildung der Umgebung des Saugroboters mit einem weiten Gesichtsfeld ausgebildet ist. Ein derartiges weites Gesichtsfeld kann zum Beispiel durch die Verwendung eines sogenannten Fish-Eye-Objektivs erzielt werden. Beispielhaft sind einige von der Kamera 8 aufnehmbare Abbildungsstrahlen 9 dargestellt. Die unteren der dargestellten Abbildungsstrahlen 9 kennzeichnen den Rand des Gesichtsfelds der Kamera 8. Die Kamera 8 weist einen Öffnungswinkel Θ auf, der im dargestellten Beispiel mehr als 180 Grad beträgt.

Am inneren Rand der Antriebsräder 4 ist jeweils eine Kodierscheibe 10 angeordnet bzw. ausgebildet, die in ihrem äußeren Bereich Markierungen aufweist. Bedingt durch die Geometrie des Saugroboters 1, bei der die Antriebsräder 4 auch oben über eine Oberkante des Gehäuses 2 des Saugroboters 1 hinausragen, und bedingt durch die Anordnung der Kamera 8 sowie ihrem weiten Öffnungswinkel können die Markierungen der Kodierscheibe 10 beider Antriebsräder 4 von der Kamera 8 abgebildet werden.

Im Betrieb des Saugroboters 1 erfasst die Kamera 8 fortlaufend das Umfeld des Saugroboters 1 und sendet eine Folge aufgenommener Bilder als Signale an die Steuereinheit 7. Diese ist zum einen dazu eingerichtet, anhand der Abbilder der Umgebung des Saugroboters 1 die Navigation des Saugroboters über die zu reinigende Fläche zu kontrollieren. Weiterhin ist anmeldungsgemäß die Steuereinheit 7 dazu eingerichtet, die von der Kamera 8 abgebildeten Markierungen der Kodierscheiben 10 auszuwerten und anhand der Markierungen die Drehstellungen und damit Drehbewegung der Antriebsräder 4 zu bestimmen. Anhand der Drehstellungen kann die von den Antriebsrädern und damit von dem Saugroboter 1 zurückgelegte Wegstrecke odometrisch bestimmt werden.

Bei dem in der Figur dargestellten Ausführungsbeispiel wird durch die Beschaffenheit des Gehäuses 2 und die Größe der Antriebsräder 4 ermöglicht, dass die Kodierscheiben 10 zumindest in ihren oberen Abschnitten im Bild der Kamera 8 sichtbar sind. Alternativ ist es möglich, die Kodierscheiben 10 innerhalb des Gehäuses 2 des Saugroboters 1 anzuordnen und jeweils mit einer Antriebsachse oder einer Getriebe- oder Motorwelle des Antriebssystems 3 zu koppeln. Im Gehäuse 2 sind dann an geeigneter Stelle ein oder mehrere Sichtfenster angeordnet, so dass jeweils ein Teil der Kodierscheiben 10 durch die Kamera 8 abgebildet werden kann. Dabei ist es auch möglich, Markierungen nicht auf der Seite der Kodierscheiben 10, wie es in der Figur dargestellt ist, anzuordnen, sondern etwas breitere, walzenförmige Kodierscheiben 10 zu verwenden, bei denen Markierungen auf der Mantelfläche angeordnet sind.

Bekannte und über Lichtschranken auslesbare Kodierscheiben sind häufig mit einem binären Muster versehen, das sich über einen oder mehrere konzentrische Ringe, auch Spuren genannt, erstreckt. Kodierscheiben mit nur einer Spur werden üblicherweise im Zusammenhang mit Inkrementalenkodern eingesetzt. Bei solchen Inkrementalenkodern werden beim Abtasten der meist uniformen, regelmäßigen Markierungen Pulse generiert, die an einen Zähler weitergeleitet und dort gezählt werden. Entsprechend muss die Abtastfrequenz hoch genug gewählt werden, um auch bei einer maximalen Drehzahl der Kodierscheibe jede Markierung erfassen zu können. Bei den uniform ausgestalteten Markierungen wird die Richtung der Drehbewegung durch einen zweiten Sensor auf der gleichen Spur erfasst, der ein zum ersten Sensor phasenverschobenes Signal generiert.

Darüber hinaus sind Kodierscheiben bekannt, die mehrere Spuren mit Markierungen aufweisen und entsprechend eine Mehrzahl von diese Spuren abtastenden Sensoren, beispielsweise Lichtschranken. Mit derartigen Sensoren ist eine absolute Erkennung der Drehstellung der Kodierscheibe möglich. Dieser Vorteil gegenüber den Inkrementalenkodern bedingt jedoch einen apparativen Mehraufwand.

Grundsätzlich ist es bei dem anmeldungsgemäßen Verfahren möglich, Kodierscheiben mit uniformen Markierungen zu verwenden und so einen Inkrementalenkoder nachzubilden. Unter Umständen ist jedoch die Rate, mit der die Kamera 8 Bilder liefert, nicht ausreichend zur Erfassung einer schnelleren Drehbewegung. Bevorzugt sind daher die Markierungen auf der Kodierscheibe so ausgebildet, dass bei Abbildung eines Ausschnitts einer definierten Mindestlänge die Markierungen in diesem Ausschnitt die Drehstellung der Kodierscheibe 10 eindeutig und absolut wiedergeben. Bei einem wiederholten Abbilden und Auswerten des von der Kamera 8 erfassten Ausschnitts der Markierungen der Kodierscheibe 10 kann dann die jeweils aktuelle Lage des Antriebsrads 4 bestimmt werden. Unter der Voraussetzung, dass eine Abbildung und Auswertung mehr als zweimal pro Umdrehung der Kodierscheibe 10 erfolgt, kann aus zwei aufeinanderfolgenden Stellungen auf die dazwischen stattgefundene Drehbewegung, insbesondere auch auf die Drehrichtung geschlossen werden. Durch auf Akkumulieren der Drehbewegungen unter Berücksichtigung des Durchmessers des Antriebsrads 4 ergibt sich dadurch zu jedem Abbildungszeitpunkt die aktuelle, von dem jeweiligen Antriebsrad 4 zurückgelegte Gesamtstrecke.

Bei walzenförmigen Kodierscheiben, die von der Kamera durch ein Sichtfenster abgebildet werden, kann die Markierung vorteilhaft auf mehrere Spuren umfassen, z.B. in Form eines Gray-Codes, der die Drehsteilung kodiert.

Bei Kodierscheiben, die auf der Innenseite der Antriebsräder angeordnet sind, bzw. bei unmittelbar an der Innenseite der Antriebsräder ausgebildeten Kodierungen, sind Markierungen mit einer einzigen Spur zu bevorzugen, damit die Antriebsräder nicht zu weit über das Gehäuse hinausragen und so störend im Kamerabild sichtbar sind, welches üblicherweise zusätzlich zur Ermittlung der Drehstellung der Antriebsräder zu Navigationszwecken ausgewertet wird. Dabei sind verschiedene Varianten möglich:
Es können in der Markierungsspur Muster mit unterschiedlich langen Feldern ausgebildet sein. Falls immer mindestens ein Feld durch die Kamera vollständig abgebildet wird, kann aus der Länge des Feldes und aus dem Ort der Begrenzung des Feldes im Kamerabild auf die Drehposition geschlossen werden. Werden unterschiedliche Graustufen oder Farben innerhalb der Markierung verwendet, dann können einige oder alle Felder auch dieselbe Länge haben. In einer alternativen Ausgestaltung kann als Muster eine Abfolge gleich langer Felder mit unterschiedlichen Helligkeiten oder auch unterschiedliche Graustufen oder auch unterschiedliche Farben vorgesehen sein. Dabei kodiert eine Abfolge jeweils eine Zahl, die der Drehstellung zugeordnet ist. Die Zahlen können Pseudozufallszahlen sein. Bei schwarz/weißen Feldern wird die Zahl binär kodiert, bei Graustufe oder Farben können auch andere Kodierungen Verwendung finden. Zusätzlich kann auch eine Grenze zwischen Feldern im Kamerabild zur Verfeinerung der aus dem Muster ermittelten Drehstellung herangezogen werden. Ein weiterer Vorteil des genannten Verfahrens ist, dass die auf diese Weise bestimmten odometrischen Weginformationen genau den Zeitpunkt der Aufnahme des Abbildes durch die Kamera 8 betreffen. Wenn das von der Kamera 8 aufgenommene Umgebungsbild darüber hinaus zu einer Positionsbestimmung oder -korrektur ausgewertet wird, beispielsweise in einem visuellen Homing-Verfahren, ist so sichergestellt, dass die unterschiedlich ermittelten Positionsinformationen zeitsynchron sind. Es ist dadurch nicht notwendig, spezielle Steuerungsvorrichtungen zur synchronen Datenerfassung oder spezielle Mechanismen zum Umgang mit nicht-synchronen Daten vorzusehen.

## Patentansprüche

1. Selbstfahrender Roboter, insbesondere selbstfahrendes Bodenbearbeitungsgerät, aufweisend
- mindestens eine Antriebseinheit (3) mit mindestens einem Antriebsrad (4),
- mindestens eine mit dem Antriebsrad (4) gekoppelte Kodierscheibe (10) zur Bestimmung einer Drehstellung des Antriebsrads (4),
- eine Kamera (8) zur Aufnahme von Bildern einer Umgebung des Roboters und
- eine Steuereinrichtung (7) zur Auswertung der Bilder der Kamera (8) und zur Steuerung der Antriebseinheit (3),
**dadurch gekennzeichnet, dass**
der selbstfahrende Roboter dazu eingerichtet ist, mit der Kamera (8) zumindest einen Teil der Kodierscheibe (10) abzubilden und eine Drehstellung des Antriebsrads (4) durch Auswertung von Bildern der Kamera (8) zu bestimmen.

2. Selbstfahrender Roboter nach Anspruch 1, bei dem die Kodierscheibe (10) außerhalb eines Gehäuses (2) des selbstfahrenden Roboters zwischen dem Gehäuse (2) und dem mindestens einen Antriebsrad (4) angeordnet ist.

3. Selbstfahrender Roboter nach Anspruch 1 oder 2, bei dem die Kodierscheibe (10) zusammen mit dem Antriebsrad (4) ausgebildet ist.

4. Selbstfahrender Roboter nach Anspruch 1, bei dem die Kodierscheibe (10) innerhalb eines Gehäuses (2) des selbstfahrenden Roboters angeordnet ist, wobei das Gehäuse (2) ein Sichtfenster aufweist, durch das zumindest ein Teil der Kodierscheibe (10) durch die Kamera (8) abbildbar ist.

5. Selbstfahrender Roboter nach Anspruch 1, bei dem die Kodierscheibe (10) Markierungen aufweist, mit denen eine Drehstellung der Kodierscheibe (10) absolut kodiert ist.

6. Selbstfahrender Roboter nach Anspruch 5, bei dem die Markierungen in einer umlaufenden Spur angeordnet sind.

7. Selbstfahrender Roboter nach Anspruch 5 oder 6, bei dem die Markierungen schwarze und weiße Bereiche und/oder Bereiche in verschiedenen Graustufen oder Farben umfassen.

8. Selbstfahrender Roboter nach einem der Ansprüche 1 bis 7, ausgebildet als Saugroboter (1).

9. Verfahren zur Bestimmung einer Drehstellung mindestens eines Antriebsrads (4) eines selbstfahrenden Roboters, der eine mit dem Antriebsrad (4) gekoppelte Kodierscheibe (10) zur Bestimmung einer Drehstellung des Antriebsrads (4), eine Kamera (8) zur Aufnahme von Bildern einer Umgebung des Roboters und eine Steuereinrichtung (7) zur Auswertung der Bilder der Kamera (8) und zur Steuerung einer das Antriebsrad (4) antreibenden Antriebseinheit (3) aufweist, mit den folgenden Schritten:
- Aufnehmen zumindest eines Bilds durch die Kamera (8), wobei die Kamera (8) zumindest einen Teil der Kodierscheibe (10) abbildet und
- Bestimmen einer Drehstellung des mindestens einen Antriebsrads (4) anhand der Abbildung der Kodierscheibe (10) in dem mindestens einen Bild.

10. Verwendung eines Verfahrens nach Anspruch 9 im Rahmen einer odometrischen Positionsbestimmung des selbstfahrenden Roboters.

11. Verwendung eines Verfahrens nach Anspruch 9, bei dem die Bilder der Kamera (8) zudem in einem visuellen Homing-Verfahren zur Positionsbestimmung verwendet werden.

## Claims

1. Self-propelled robot, in particular self-propelled floor treatment device, comprising
- at least one drive unit (3) comprising at least one drive wheel (4),
- at least one encoder disc (10) coupled to the drive wheel (4) for determining a rotational position of the drive wheel (4),
- a camera (8) for capturing images of the surroundings of the robot, and
- a control device (7) for evaluating the images from the camera (8) and for controlling the drive unit (3),
**characterised in that**
the self-propelled robot is designed to image at least part of the encoder disc (10) by means of the camera (8) and to determine a rotational position of the drive wheel (4) by evaluating images from the camera (8).

2. Self-propelled robot according to claim 1, wherein the encoder disc (10) is arranged outside a housing (2) of the self-propelled robot, between the housing (2) and the at least one drive wheel (4).

3. Self-propelled robot according to either claim 1 or claim 2, wherein the encoder disc (10) is formed together with the drive wheel (4).

4. Self-propelled robot according to claim 1, in which the encoder disc (10) is arranged inside a housing (2) of the self-propelled robot, wherein the housing (2) comprises a viewing window through which at least part of the encoder disc (10) can be imaged by means of the camera (8).

5. Self-propelled robot according to claim 1, wherein the encoder disc (10) comprises markings by means of which a rotational position of the encoder disc (10) is absolutely encoded.

6. Self-propelled robot according to claim 5, wherein the markings are arranged in a circumferential track.

7. Self-propelled robot according to either claim 5 or claim 6, wherein the markings comprise black and white regions and/or regions in various shades of grey or various colours.

8. Self-propelled robot according to any of claims 1 to 7, designed as a robotic vacuum cleaner (1).

9. Method for determining a rotational position of at least one drive wheel (4) of a self-propelled robot, which comprises an encoder disc (10) coupled to the drive wheel (4) for determining a rotational position of the drive wheel (4), a camera (8) for capturing images of the surroundings of the robot, and a control device (7) for evaluating the images from the camera (8) and for controlling a drive unit (3) driving the drive wheel (4), said method comprising the following steps:
- capturing at least one image by means of the camera (8), wherein the camera (8) images at least part of the encoder disc (10), and
- determining a rotational position of the at least one drive wheel (4) using the imaging of the encoder disc (10) in the at least one image.

10. Use of a method according to claim 9 in the context of odometric position determination of the self-propelled robot.

11. Use of a method according to claim 9, wherein the images from the camera (8) are also used in a visual homing method for the purposes of position determination.

## Revendications

1. Robot autopropulsé, en particulier appareil autopropulsé de traitement du sol, présentant
- au moins une unité d'entraînement (3) avec au moins une roue d'entraînement (4),
- au moins un disque de codage (10) couplé à la roue d'entraînement (4) pour la détermination d'une position de rotation de la roue d'entraînement (4),
- une caméra (8) pour la prise d'images d'un environnement du robot, et
- un dispositif de commande (7) pour l'analyse des images de la caméra (8) et pour la commande de l'unité d'entraînement (3),
**caractérisé en ce que**
le robot autopropulsé est agencé pour, avec la caméra (8), reproduire au moins une partie du disque de codage (10) et pour déterminer une position de rotation de la roue d'entraînement (4) par l'analyse d'images de la caméra (8).

2. Robot autopropulsé selon la revendication 1, dans lequel le disque de codage (10) est disposé à l'extérieur d'un carter (2) du robot autopropulsé entre le carter (2) et la roue d'entraînement (4) au moins au nombre de un.

3. Robot autopropulsé selon la revendication 1 ou 2, dans lequel le disque de codage (10) est constitué conjointement avec la roue d'entraînement (4).

4. Robot autopropulsé selon la revendication 1, dans lequel le disque de codage (10) est disposé à l'intérieur d'un carter (2) du robot autopropulsé, dans lequel le carter (2) présente un hublot à travers lequel au moins une partie du disque de codage (10) peut être représentée par la caméra (8).

5. Robot autopropulsé selon la revendication 1, dans lequel le disque de codage (10) présente des marquages avec lesquels une position de rotation du disque de codage (10) fait l'objet d'un codage absolu.

6. Robot autopropulsé selon la revendication 5, dans lequel les marquages sont disposés sur une piste périphérique.

7. Robot autopropulsé selon la revendication 5 ou 6, dans lequel les marquages comprennent des zones noires et blanches et/ou des zones en différents niveaux de gris ou différentes couleurs.

8. Robot autopropulsé selon l'une des revendications 1 à 7, constitué en tant qu'aspirateur robot (1).

9. Procédé de détermination d'une position de rotation d'au moins une roue d'entraînement (4) d'un robot autopropulsé qui présente un disque de codage (10) couplé à la roue d'entraînement (4) pour la détermination d'une position de rotation de la roue d'entraînement (4), une caméra (8) pour la prise d'images d'un environnement du robot, et un dispositif de commande (7) pour l'analyse des images de la caméra (8) et pour la commande d'une unité d'entraînement (3) entraînant la roue d'entraînement (4), avec les étapes suivantes :
- prise d'au moins une image par la caméra (8), où la caméra (8) reproduit au moins une partie du disque de codage (10), et
- définition d'une position de rotation de la roue d'entraînement (4) au moins au nombre de un à l'aide de la reproduction du disque de codage (10) dans l'au moins une image.

10. Utilisation d'un procédé selon la revendication 9 dans le cadre d'une détermination de position odométrique du robot autopropulsé.

11. Utilisation d'un procédé selon la revendication 9, dans lequel les images de la caméra (8) sont utilisées en outre dans un procédé de guidage visuel pour la détermination de la position.
